(19) Europäisches Patentamt
European Patent Office
Office européen des brevets

(11) EP 1 840 761 A1

## (12) EUROPEAN PATENT APPLICATION

(43) Date of publication:
03.10.2007 Bulletin 2007/40

(51) Int Cl.:
*G06F 17/30* (2006.01)

(21) Application number: 05258000.8

(22) Date of filing: 22.12.2005

| | |
|---|---|
| (84) Designated Contracting States:<br>AT BE BG CH CY CZ DE DK EE ES FI FR GB GR HU IE IS IT LI LT LU LV MC NL PL PT RO SE SI SK TR<br>Designated Extension States:<br>AL BA HR MK YU<br><br>(71) Applicant: Office-Shadow Limited<br>Surrey RH2 8QG (GB) | (72) Inventor: Maddox, Simon Mr.<br>Reigate<br>Surrey RH2 0JL (GB)<br><br>(74) Representative: Downing, Michael Philip et al<br>Fry Heath & Spence LLP,<br>The Gables,<br>Massetts Road<br>Horley,<br>Surrey RH6 7DQ (GB) |

(54) **Data storage system**

(57)    An alternative form of database architecture is described, comprising a plurality of data items, and a plurality of hierarchical node structures, wherein each data item is stored together with relationship data detailing nodes in one or more of the hierarchical node structures with which the data item is associated. The relationship data can be stored as a Boolean expression acting on node values. User identity can be associated with at least one node in one or more of the hierarchical node structures. Child nodes can inherit an association with a data item from a parent node. This can then be embodied as (for example) a computer system, or a standalone data storage system accessible by other computer systems, or as a programmed data carrier able to impart the architecture to such a system.

Fig.3

**Description**

FIELD OF THE INVENTION

The present invention relates to a data storage system.

BACKGROUND ART

Data storage systems per se are well known, and are available in a variety of forms. The welcome emergence of standard database languages has meant that the principal area in which effort needs to be devoted when designing a database to meet a specific need is in the design of the database architecture rather than the mechanics of the data handling itself.

Most users are not adept at doing so, and therefore look for suitable predefined database structures that have been made available. Where there is a specific and clearly definable market area, such as intellectual property records, there is usually a range of tailored packages that offer the specific functionality required. In other areas, the general-purpose database architectures are difficult to apply in a simple and straightforward manner.

Classical hierarchical structures fit well to a traditional database. Where there is a defined controlling entity ("parent") that has control over or responsibility for a defined subsidiary entity ("child") then the relationship is easy to define. This relationship can be extended in either direction by way of grandparents, grandchildren etc to form a hierarchical "tree" structure. This is often used in database structures; an example is Novell Directory Services in which each networked item is allocated a location in a tree structure (the "NDS tree") and acquires rights to interact with other networked items that are dependent on its location in the tree.

SUMMARY OF THE INVENTION

The present invention seeks to provide an alternative form of database architecture that extends the functionality of a database so that certain common forms of data structure can be accommodated more easily. This can then be embodied as (for example) a novel and useful computer system, or a standalone data storage system accessible by other computer systems, or as a programmed data carrier able to impart the architecture to such a system.

Some data forms do not adapt easily to a strict hierarchical tree structure. An example is business continuity information; there may be emergency instructions that are generic to the entire enterprise, together with instructions for a particular location and for particular departments. However, this does not allow for some departments to be spread over several locations, for example to provide the same form of support to a variety of other departments. In such situations, those departments do not fit beneath any specific location, nor vice-versa, and the hierarchical structure fails.

Another example is a staff organisation chart. In an enterprise that employs staff in multidisciplinary teams where one staff member might have roles that within multiple teams, a simple hierarchical organisation chart cannot be drawn in a straightforward manner.

The present invention therefore provides a data storage system which stores a plurality of data items, and a plurality of hierarchical node structures, wherein each data item is stored together with relationship data detailing nodes in one or more of the hierarchical node structures with which the data item is associated.

The relationship data is preferably stored as a Boolean expression acting on node values. This can swiftly return a logical yes/no output that details whether the data item is available at that node.

Most data storage systems are accessible by a plurality of users, who will typically have a user identity consisting of the various access privileges necessary for governing whether data is visible to them or not. In the present invention, it is convenient to associate user identities with at least one node in one or more of the hierarchical node structures. This permits a user to view data items associated with a node with which the respective user identity is associated. Conversely, users cannot view data items that do not have an association with any node with which the respective user identity is associated.

It is preferred that child nodes can inherit an association with a data item from a parent node. It should be noted that this is a reversal of the usual practice, i.e. that parent items in a hierarchical tree inherit rights (etc) from their children.

The present invention also relates to a computer system including such a data storage system, and to a data storage element comprising data adapted to impart the above-described database architecture to a programmable computer system.

BRIEF DESCRIPTION OF THE DRAWINGS

An embodiment of the present invention will now be described by way of example, with reference to the accompanying figures in which;

Figure 1 shows an example of a first node structure;

Figure 2 shows an example of a second node structure; and

Figure 3 shows a relationship data set for a particular data item.

DETAILED DESCRIPTION OF THE EMBODIMENTS

As discussed above, we seek to provide a way of storing information such as business information electronically, such that it may be related to any number of organisational hierarchies or perspectives. This allows users to create relevant business plans or business continuity plans for different areas or sections of an organisation.

Business information may consist of plans, procedures, roles, assets, appendices, processes and other types of data. The invention separates the business information (Data) from the hierarchies (hereinafter referred to as "Perspectives") and links the two using a third mechanism - referred to as "Relational Equations". A piece of information may have any number of Relational Equations, each specifying a link to one or more nodes within a Perspective.

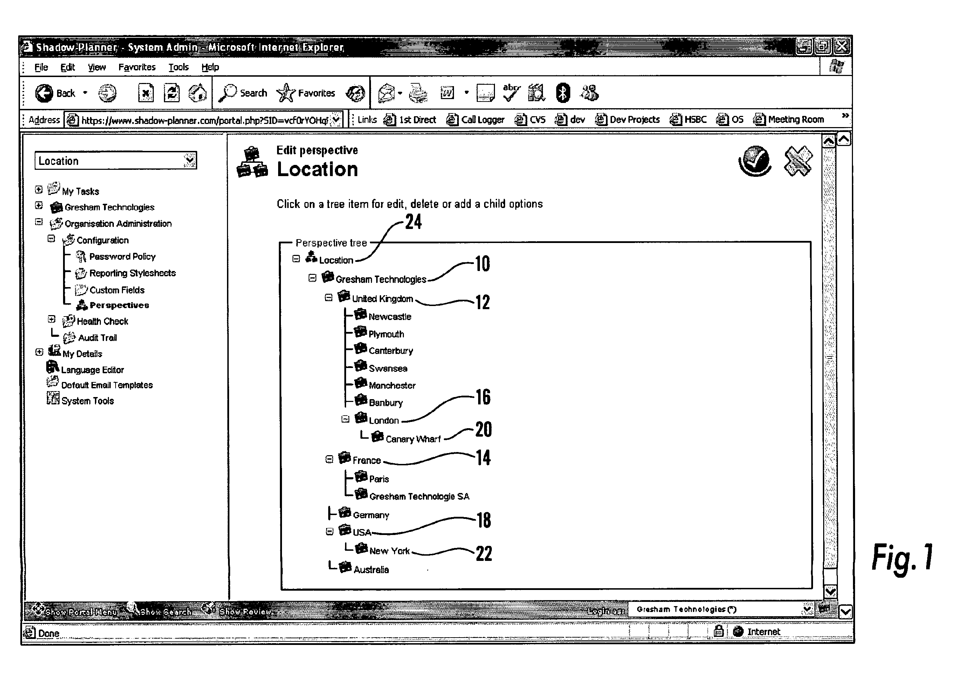

Business information within an organisation is segmented, normally using a hierarchical tree. Figure 1 gives an example of a Hierarchy. The (fictional) firm Gresham Technologies 10 operates in a number of jurisdictions and is thus divided into business units corresponding to those jurisdictions. Within the United Kingdom 12 and France 14 there are several offices in different cities, and hence these business units have further subdivisions into the particular offices. London 16 and the USA 18 have only a single office, but provision has been made for further such offices by specifying a "Canary Wharf" subdivision 20 and a New York subdivision 22 respectively. It should be noted that Canary Wharf is an locality in London.

Difficulties occur due to the complex nature of many organisations, where a single hierarchy is not adequate. For example a location based hierarchy is excellent for site-based evacuation plans, but unsuitable for procedures that apply to a particular department across many sites. For example, there may be evacuation (or other emergency) instructions that are applicable to any IT department, or any finance department, etc. Without multiple hierarchies, it is necessary to split sites down to departments and then store multiple copies of the procedure in each department node. Thus, the IT department would have to exist as a subdivision to each and every location, and the staff responsible for maintaining the database would have to remember to make any necessary changes to each and every IT department. As and when an IT department is opened in an office that had not previously had its own IT staff, a new subdivision will have to be created although no data has changed. These are thus laborious processes that act as an invitation to error.

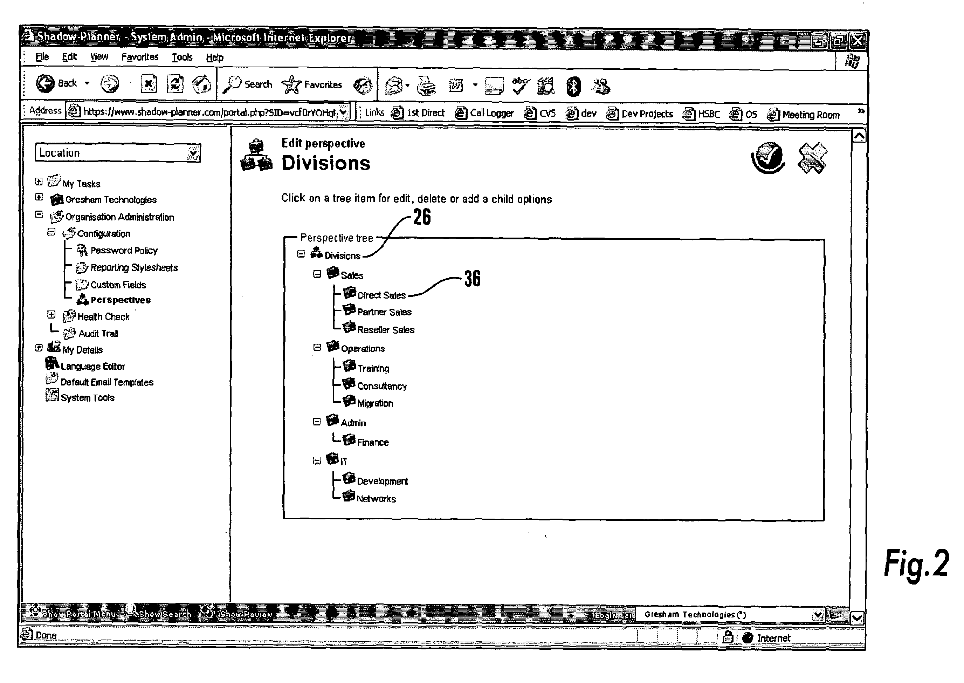

This invention provides an electronic database structure that allows any number of hierarchies to be created. These are referred to as Perspectives. Perspectives are created to be independent of each other. For example, in the above case, a "Locations" perspective 24 could contain regions, countries, cities, sites etc. and a "Departments" perspective 26 could contain a list of departments and sub-departments. Each item in the Perspective is called a Node, and represents the description of a repository for Data. Each Perspective can contain an unlimited number of Nodes within a hierarchical tree structure. Thus, figure 1 shows the "Locations" perspective 24 for Gresham Technologies and figure 2 shows a "Divisions" perspective 26 which sets out the various divisions and subdivisions of the firm in terms of their functions.

The business or business continuity information that is stored electronically within the system comprises various types of data including, but not limited to:

- Business continuity plans

- Business development plans

- Procedures

- Standard Operating Procedures

- Contacts

- Roles

- Appendices

- Processes

- Assets

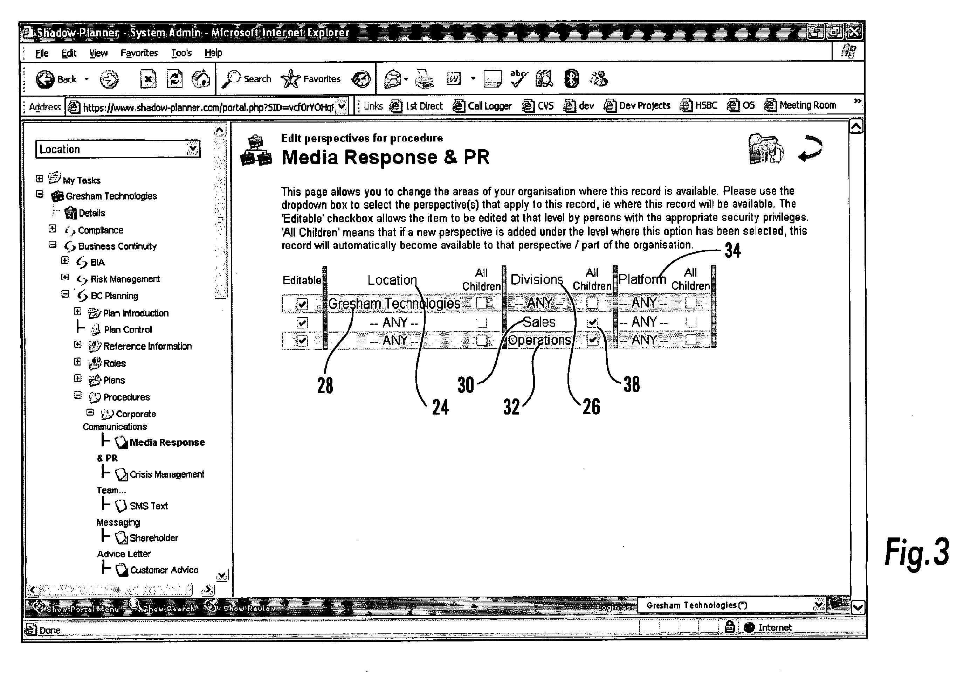

Each piece of information has a use when linked to one or more nodes in the perspectives. This linking is set up using Relationship Equations, an example of which is shown in Figure 3. In this case, the data item concerned is a set of instructions as to how to respond to an enquiry from the news media. The GUI is set to show that the item is applicable to any division in the top-level location node 28, i.e. "Gresham Technologies", and to any division within the "Sales" Division 30 and "Operations" Division 32 at any location. This example includes a third perspective, "Platform" 34, which is evidently not relevant to this data item and is therefore not specified.

It can be seen that the data item is available to divisions within the "Sales" Division 30 and "Operations" Division 32, such as the "Direct Sales" division 36 shown in figure 2, since the "All Children" box 38 is ticked for each of these lines. Thus, all divisions within these are included.

In practice, the information entered into the system via the GUI shown in figure 3 is encoded as a Boolean expression. For the item shown in figure 3, this is:

$$(location="Gresham\ Technologies"\ AND\ Divisions=*\ AND\ Platform=*)\ OR$$

$$(location=*\ AND\ Divisions<="Sales"\ AND\ Platform=*)\ OR\ (location=*$$

$$AND\ Divisions<="Operations"\ AND\ Platform=*)$$

where the "<=" operator is, in this case, used to denote "is the same as or is a child of" and "*" is the wild operator.

In this way, an emergency response manual can be built up that is tailorable for each user. A user in the direct sales department located in Plymouth, for example, will see all instructions that are;

- generic to the whole of Gresham Technologies, or

- generic to the whole of the UK arm of Gresham Technologies, or

- specific to the Plymouth site, or

- generic to all divisions, or

- generic to the Sales division, or

- specific to the Direct Sales Division.

Instructions that are particular to (say) the Paris office are automatically filtered out, and the user is not distracted by them. In the case of an emergency response manual, it is self-evident that irrelevant information is likely to be appositive hindrance.

There can be any number of Relationship Equations for a piece of information. If there are none then that piece of information is not used within the organisation. Each Relationship Equation has a setting for every defined Perspective and must include one or more node from each Perspective.

Another example of a use for this database structure might be for asset tracking. Data relating to equipment such as the type and serial number of an item of information technology equipment, can be stored against various perspectives including location, manufacturer, supplier, operating system etc. Thus, all IBM laptops could be located quickly if a firmware update was discovered, or all equipment in the Paris office could be listed in case of an insurance claim.

It will of course be understood that many variations may be made to the above-described embodiment without departing from the scope of the present invention.

## Claims

1. A data storage system which stores;
   a plurality of data items, and
   a plurality of hierarchical node structures, wherein
   each data item is stored together with relationship data detailing nodes in one or more of the hierarchical node structures with which the date item is associated.

**2.** A data storage system according to claim 1 in which the relationship data is stored as a Boolean expression acting on node values.

**3.** A data storage system according to claim 2 in which the Boolean expression returns a logical yes/no output that details whether the data item is available at that node.

**4.** A data storage system according to any one of the preceding claims, which is accessible by a plurality of users, the users having a user identity associated with at least one node in one or more of the hierarchical node structures.

**5.** A data storage system according to claim 4 in which each user can view data items associated with a node with which the respective user identity is associated.

**6.** A data storage system according to claim 4 in which users cannot view data items that do not have an association with any node with which the respective user identity is associated.

**7.** A data storage system according to any one of the preceding claims in which a child node can inherit an association with a data item from a parent node.

**8.** A computer system including a data storage system according to any one of claims 1 to 7.

**9.** A data storage device comprising data adapted to impart a database architecture to a programmable computer system, the database architecture comprising;
a plurality of data items, and
a plurality of hierarchical node structures, wherein
each data item is stored together with relationship data detailing nodes in one or more of the hierarchical node structures with which the date item is associated.

Fig. 1

**Fig.2**

Shadow-Planner - System Admin - Microsoft Internet Explorer

File   Edit   View   Favorites   Tools   Help

Back   |   Address https://www.shadow-planner.com/portal.php?SID=vcf0rYOHqr

Links   1st Direct   Call Logger   CVS   dev   Dev Projects   HSBC   OS   Meeting Room

Location

- My Tasks
- Gresham Technologies
- Organisation Administration
  - Configuration
    - Password Policy
    - Reporting Stylesheets
    - Custom Fields
    - Perspectives
  - Health Check
  - Audit Trail
- My Details
  - Language Editor
  - Default Email Templates
  - System Tools

Edit perspective
**Divisions**

Click on a tree item for edit, delete or add a child options

Perspective tree — 26

- Divisions — 36
  - Sales
    - Direct Sales
    - Partner Sales
    - Reseller Sales
  - Operations
    - Training
    - Consultancy
    - Migration
  - Admin
    - Finance
  - IT
    - Development
    - Networks

Login as   Gresham Technologies (*)

Done   Internet

Shadow-Planner - System Admin - Microsoft Internet Explorer

File   Edit   View   Favorites   Tools   Help

Back ▾ | ☑ ☑ ☑ | 🔍 Search ⭐ Favorites | 🖂 ▾ 🖶 🖼 ▾ 🗆 ✓ 🖼 ▨ ☺

Address 🔗 https://www.shadow-planner.com/portal.php?SID=vcfOrYOHqf ▾ | Links 🔗 1st Direct 🔗 Call Logger 🔗 CVS 🔗 dev 🔗 Dev Projects 🔗 HSBC 🔗 OS 🔗 Meeting Room »

Location ▾

⊞ My Tasks
⊟ Gresham Technologies
├ Details
⊞ Compliance
⊟ Business Continuity
  ⊞ BIA
  ⊞ Risk Management
  ⊟ BC Planning
    ⊞ Plan Introduction
    ├ Plan Control
    ⊞ Reference Information
    ⊞ Roles
    ⊞ Plans
    ⊟ Procedures
      ⊟ Corporate Communications
        ├ Media Response & PR
        ├ Crisis Management Team...
        ├ SMS Text Messaging
        ├ Shareholder Advice Letter
        ├ Customer Advice

Edit perspectives for procedure
## Media Response & PR

This page allows you to change the areas of your organisation where this record is available. Please use the dropdown box to select the perspective(s) that apply to this record, ie where this record will be available. The 'Editable' checkbox allows the item to be edited at that level by persons with the appropriate security privileges. 'All Children' means that if a new perspective is added under the level where this option has been selected, this record will automatically become available to that perspective / part of the organisation. ── 34

| Editable | Location | All Children | Divisions | All Children | Platform | All Children |
|---|---|---|---|---|---|---|
| ✔ | Gresham Technologies | ☐ | -- ANY -- | ☐ | -- ANY -- | ☐ |
| ✔ | -- ANY -- | ☐ | Sales | ✔ | -- ANY -- | ☐ |
| ✔ | -- ANY -- | ☐ | Operations | ✔ | -- ANY -- | ☐ |

28        24        30   32   26        38

Show Portal Menu    Show Search    Show Review    Login as: Gresham Technologies (*) ▾

Done    🔒 ● Internet

*Fig.3*

**European Patent Office**

**EUROPEAN SEARCH REPORT**

Application Number

EP 05 25 8000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/084066 A1 (WATERMAN SCOTT A ET AL) 1 May 2003 (2003-05-01) * paragraphs [0002] - [0031] * * figure 2 * ----- | 1-9 | INV. G06F17/30 |
| X | WO 01/82143 A (MICROSOFT CORPORATION) 1 November 2001 (2001-11-01) * figure 3 * * page 26, line 4 - page 27, line 24 * ----- | 1-9 | |

TECHNICAL FIELDS SEARCHED (IPC)

G06F

The present search report has been drawn up for all claims

| Place of search | Date of completion of the search | Examiner |
|---|---|---|
| The Hague | 26 May 2006 | Denoual, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 8000

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2006

| Patent document cited in search report | | Publication date | Patent family member(s) | | Publication date |
|---|---|---|---|---|---|
| US 2003084066 | A1 | 01-05-2003 | NONE | | |
| WO 0182143 | A | 01-11-2001 | AU | 3845401 A | 07-11-2001 |
| | | | CN | 1585942 A | 23-02-2005 |
| | | | EP | 1464008 A2 | 06-10-2004 |
| | | | JP | 2004506964 T | 04-03-2004 |

For more details about this annex : see Official Journal of the European Patent Office, No. 12/82